Europäisches Patentamt

European Patent Office

Office européen des brevets

(19)

(11) **EP 1 448 003 A2**

(12) **EUROPEAN PATENT APPLICATION**

(43) Date of publication:
**18.08.2004 Bulletin 2004/34**

(51) Int Cl.⁷: **H04Q 7/30**

(21) Application number: **04003378.9**

(22) Date of filing: **16.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **14.02.2003 KR 2003009390**

(71) Applicant: **Samsung Electronics Co., Ltd.**
**Suwon-si, Gyeonggi-do (KR)**

(72) Inventor: **Hur, Suk-Kyun,**
**Samsung Electronics Co., Ltd.**
**Suwon-si Gyeonggi-do (KR)**

(74) Representative: **Lang, Johannes, Dipl.-Ing.**
**Bardehle Pagenberg Dost Altenburg Geissler Isenbruck,**
**Postfach 86 06 20**
**81633 München (DE)**

(54) **Apparatus and method for controlling amplifier to save power**

(57) A method and apparatus for controlling amplifiers to save power are provided. In a method of controlling at least two amplifiers provided in a BS, for amplifying transmitted signals to an MS, the BS decides an amplifier to be enabled or disabled between the at least two amplifiers, and enables or disables the decided amplifier.

FIG.3

**Description**

**BACKGROUND OF THE INVENTION**

1. Field of the Invention:

The present invention relates generally to an amplifier controlling apparatus and method in a mobile communication system, and in particular, to an apparatus and method for controlling amplifiers in a base station (BS) to save the transmit power of the BS on a forward link.

1. Description of the Related Art:

Although code division multiple access (CDMA) has traditionally provided mainly voice service, 3rd generation mobile communication systems enable high-speed data transmission as well as the voice service. High-quality voice, moving pictures, and Internet browsing are available in the 3rd generation systems. In these communication systems, radio links between a mobile station (MS) and a BS can be characterized as a forward link directed from the BS to the MS and a reverse link directed from the MS to the BS.

Transmit power on the forward link must vary with the number of users and the service provided. Existing mobile communication systems, however, transmit on the forward link all the time with full power. For power transmission on the forward link, the BS is equipped with at least two amplifiers. Traditionally, the BS is designed to supply power to the amplifiers all the time.

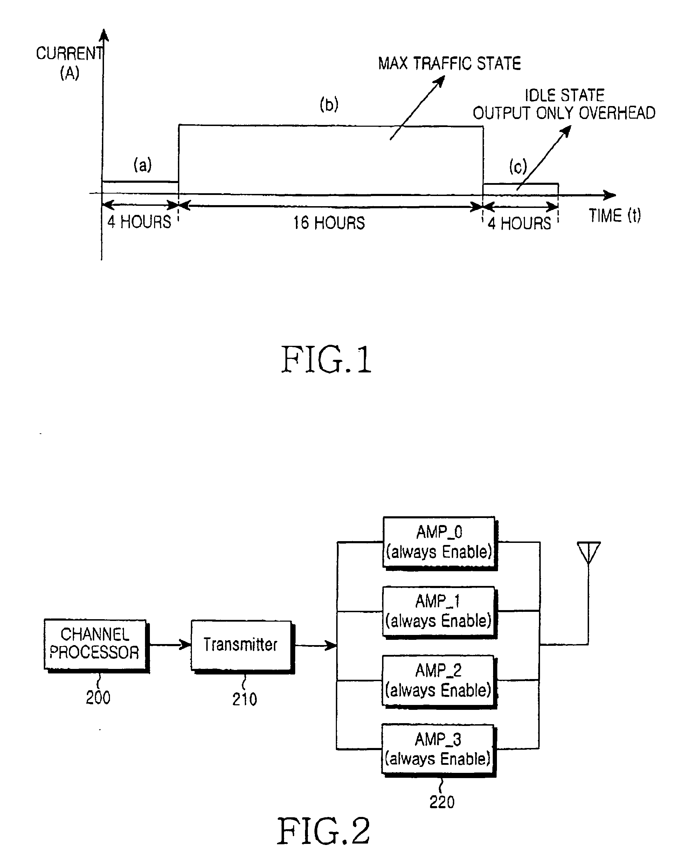

FIG. 1 is a graph illustrating an average traffic distribution for one day in a typical BS.

Referring to FIG. 1, the horizontal axis represents time, and the vertical axis represents the amount of current consumption. Reference characters (a) and (c) indicate time periods for which there are little voice and data communication, for example, dawn or morning. Reference character (b) denotes daytime or evening in which voice and data communication is active. In the time periods of (a) and (c), there are fewer number of users, and thus there is no need to provide the full level of transmit power on the forward link.

FIG. 2 is a block diagram of a conventional transmit power controlling apparatus in a BS.

Referring to FIG. 2, the transmit power controlling apparatus comprises a channel processor 200, a transmitter 210 and an amplification portion 220 that includes at least one amplifier (AMP). After processing in the channel processor 200 and the transmitter 210, an input signal is amplified in the amplification unit 220 prior to transmission to an MS.

As described above, because there is little voice and data communication during the time periods of (a) and (c), the BS does not need to transmit signals to the MS with full power. Nonetheless, forward signals are transmitted with full power in the conventional technology. This leads to unnecessary power dissipation and operation costs.

In addition, because of the continuous full power transmission, thermal stress as well as electrical stress is imposed on all amplifiers in the BS As a result, the lives of devices in the amplifiers are shortened, thereby reducing the mean time between failure for the amplifiers.

SUMMARY OF THE INVENTION

An object of the present invention is to substantially solve at least the above problems and/or disadvantages and to provide at least the advantages below. Accordingly, an object of the present invention is to provide a method and apparatus for reducing power consumption in a BS.

Another object of the present invention is to provide a method and apparatus for lengthening the life of an amplifier in a BS.

The above objects are achieved by providing a method and apparatus for controlling amplifiers to save power.

According to one aspect of the present invention, a method is provided for controlling at least two amplifiers provided in a BS, wherein the amplifiers amplify a transmitted signal to the MS. The method comprises the BS deciding on an amplifier to be enabled or disabled between the at least two amplifiers, and enabling or disabling the decided amplifier.

According to another aspect of the present invention, in an apparatus for controlling at least two amplifiers provided in a BS, wherein the amplifiers amplify a transmitted signal to the MS. The apparatus for controlling the at least two amplifiers comprises a channel combiner for measuring the total power of each sector of the BS, and a sleep mode operator for deciding whether to enable or disable the at least two amplifiers based on the measured power.

BRIEF DESCRIPTION OF THE DRAWINGS

The above and other objects, features and advantages of the present invention will become more apparent from the following detailed description when taken in conjunction with the accompanying drawings in which:

FIG. 1 is a graph illustrating an average traffic distribution for one day in a typical BS;

FIG. 2 is a block diagram of a conventional transmit power controlling apparatus in the BS;

FIG. 3 is a block diagram of a power amplifier controlling apparatus in a BS according to an embodiment of the present invention;

FIG. 4 is a flowchart illustrating a power amplifier controlling method according to an embodiment of the present invention ;

FIG. 5 is a flowchart illustrating another power amplifier controlling method according to another embodiment of the present invention;

FIG. 6 is a flowchart illustrating another power amplifier controlling method according a third embodiment of the present invention; and

FIG. 7 is a graph illustrating the increase in reliability over time as a function of amplifier operation modes when using the methods and apparatuses according to the embodiments of the present invention.

DETAILED DESCRIPTION OF THE PREFERRED EMBODIMENT

Several embodiments of the present invention will be described herein below with reference to the accompanying drawings. In the following description, well-known functions or constructions are not described in detail since they would obscure the invention in unnecessary detail.

The embodiments of the present invention pertain to an apparatus and method for controlling transmit power to an MS from a BS, by controlling at least two amplifiers in a BS.

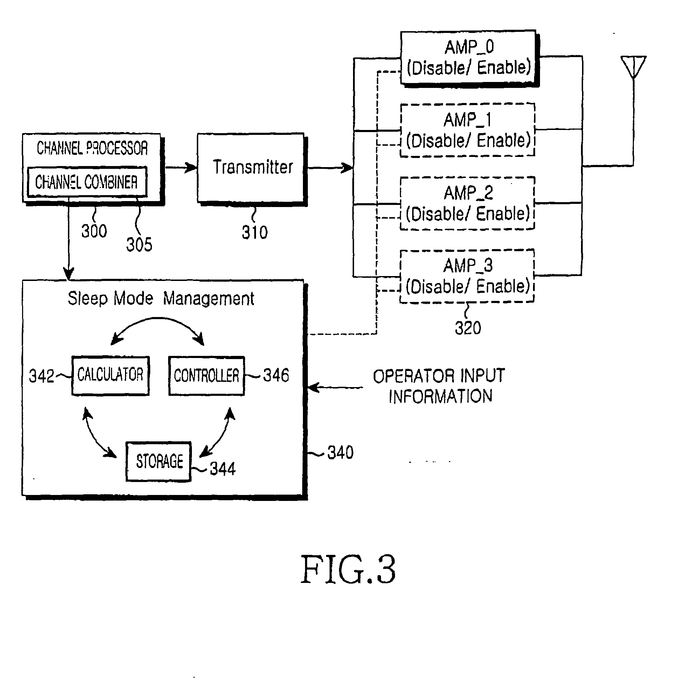

The BS is equipped with a predetermined controller. The controller calculates the power of amplifiers and disables/enables particular amplifiers according to the power. Specifically, the controller compares required power with current loaded power and, if there is an excess of the current loaded power from the power amplifiers (i.e., there is more power available from the power amplifiers than is required), disables one the power amplifiers. The disable/enable control is implemented on the amplifiers as illustrated in FIG. 3. Operation of the amplifiers in accordance with the embodiments of the present invention is referred to as a sleep mode, hereinafter.

An example of power amplifier operation according to the embodiments of the present invention will be described below.

The power amplifier operation can be considered in different ways (in three ways herein) according to the number of amplifiers connected to one antenna.

Case 1: when two amplifiers are provided to the BS and share the load, one of them operates in a sleep mode during periods of less traffic, whereas the other amplifier is in an idle state to transmit only on the overloaded channel.

Case 2: when three amplifiers are provided to the BS and share the load, two of them operate in the sleep mode during periods of less traffic, whereas the other amplifier is in the idle state to transmit only on the overloaded channel.

Case 3: when four amplifiers are provided to the BS and share the load, three of them operate in the sleep mode during periods of less traffic, whereas the other amplifier is in the idle state to transmit only on the overloaded channel.

In the above operations, the number of enabled amplifiers varies with required power.

Amplifier Sleep Mode

When controlling the amplifiers in accordance with the embodiments of the present invention, the sleep mode operation presupposes automatic mode tradition and can be divided into the following three modes.

1. Manual Mode

The manual mode is temporarily set by an operator's request. The operator decides the number of amplifiers to be enabled. To prevent errors involved with total dependence on the operator's judgment with regard to the number of amplifiers to be enabled, a not-force mode is further available in the manual mode.

Thus, the manual mode is divided into a force mode and a non-force mode, the latter can be alternatively referred to as an artificial intelligence mode.

In the force mode, the operator can enable an amplifier based on the operator's judgment alone. The BS receives the ID of an amplifier at any time and enables/disables the selected amplifier.

In the artificial intelligence mode, although enabling amplifiers is dependent on the operator's decision on the whole, if the number of amplifiers to be enabled as set by the operator is less than actual power requirements, the BS automatically generates a command error message and disables none of the amplifiers such that the required amplifiers are maintained in an enabled state.

After setting the number of amplifiers as the operator requests, the power amplifiers are controlled in the same manner as in an auto mode which will be described below. The manual mode differs from the auto mode, however, in that the manual mode is temporary, while the control operation is repeated at predetermined time intervals in the auto mode.

2. Auto Mode

In the auto mode, the BS itself calculates the number of required power amplifiers and if there are redundant amplifiers, automatically disables the power amplifiers.

The variable check time interval, is considered in adjusting the number of power amplifiers to be enabled. Check time interval is a variable representing the time interval in which the comparison between the number of required amplifiers with that of enabled amplifiers is carried out and the number of amplifiers to be enabled is decided. This variable is changeable by the operator. With a shorter check time interval, traffic changes can be coped with more flexibly, but system load is increased.

3. Scheduling Mode

The scheduling mode allows the operator to manually adjust the number of amplifiers to be enabled for a time period set by the operator. In this sense, the scheduling mode is an expansion of the manual mode with the concept of scheduling introduced. The operator is free to enable/disable particular amplifiers in the manual mode, whereas he is allowed to enable/disable particular amplifiers only for the predetermined time period in the scheduling mode.

FIG. 3 is a block diagram of a power amplifier controlling apparatus in a BS according to the embodiment of the present invention.

Referring to FIG. 3, the power amplifier controlling apparatus comprises a channel processor 300, a transmitter 310, a sleep mode operator 340, and an amplification portion 330 with a plurality of amplifiers. The channel processor 300 includes a channel combiner 305, and the sleep mode operator 340 includes a calculator 342, a storage 344, and a controller 345. The components illustrated in FIG. 3 will be described below with a description of the sleep mode operation.

Power Calculation and Amplifier Control

For notational simplicity, power calculation and amplifier control will be described without distinguishing the manual, auto, and scheduling modes, in reference to FIG. 3.

In an amplifier control algorithm, the operator activates an amplifier sleep mode and the BS receives a compensation factor from the operator. The compensation factor is stored in the storage 344. The BS automatically decides the number of current operating amplifiers and stores information about the number in the storage 344. The channel combiner 305 reports the total power for each sector to the calculator 342 and the storage 344. Since digital gains are summed for each sector of the BS, the channel combiner 305 can measure power required for the sector. In the sleep mode, the calculator 342 calculates the number R of required amplifiers based on the required power stored in the storage 344, the number of current operating amplifiers, and the compensation factor, by

$$R = ROUNDUP[Required\ Power/(Power\ per\ AMPxC)] \tag{1}$$

The controller 346 compares the number of required amplifiers with that of the current operating amplifiers. If more amplifiers are to be enabled, the controller 346 enables the amplifiers. On the contrary, if unnecessary amplifiers are currently in operation, the controller 346 disables them. Upon receipt of an Enable/Disable command from the operator in either a manual mode or a scheduling mode, the calculator 342 calculates the number of required amplifiers and decides whether to execute the command or to display a command error message, and the controller 346 controls the amplifiers correspondingly according to the decision.

For calculating R, the calculator 342 needs the following parameters.

(Table 1)

| |
|---|
| R=Required Min #of PAU (the number of amplifiers in correspondence with power to be currently output) |
| O=Operating #of PAU (the number of amplifiers in operation) |
| D=# of Disable PAU by Force (the number of amplifiers to be disabled by force by the operator |
| E=# of Enable PAU by Force (the number of amplifiers to be enabled by the operator) |
| C=Compensation (Parameter by which an amplifier is disabled later or enabled earlier than desired, for stable system operation) |

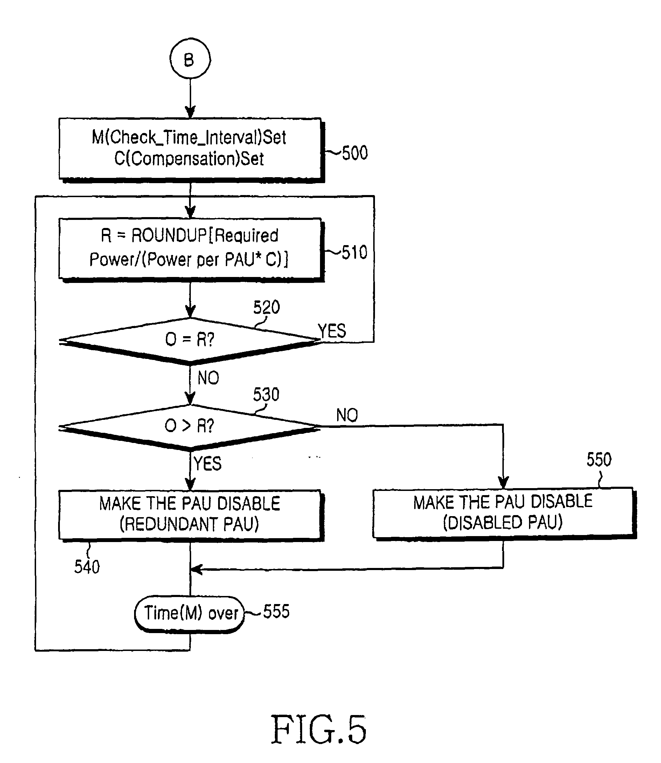

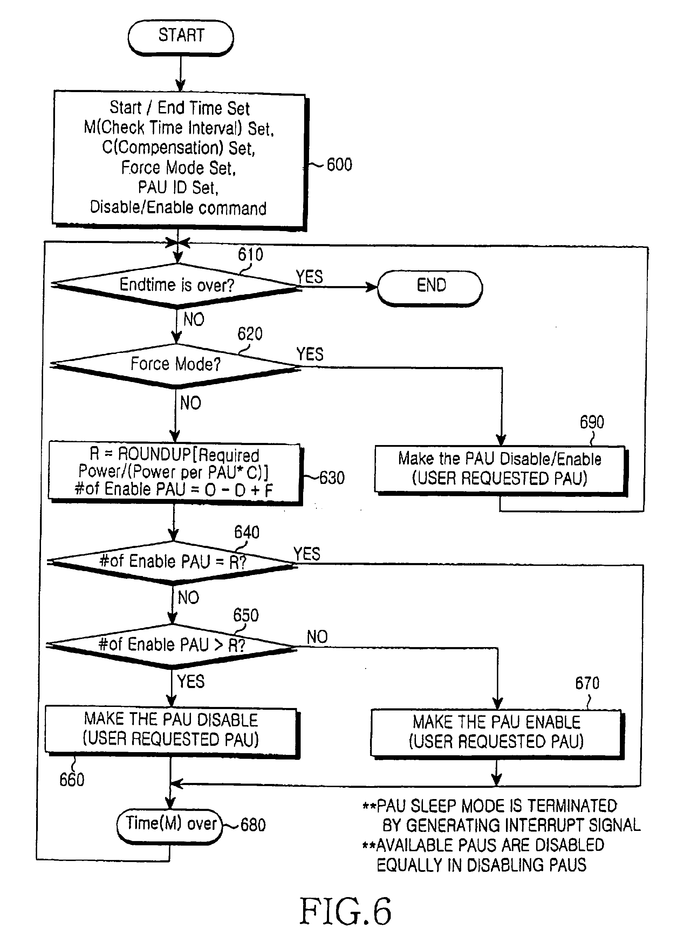

The compensation parameter C will further be described.
C<1: "C" is set to be less than 1 when stable system operation is needed. This can occur when the BS is servicing a city environment, or when more amplifiers than needed can be used, and rapid traffic requirement is coped with flexibly.
C=1: "C" is set to be equal to 1 when as many amplifiers as needed are operated.
C>1: "C" is set to be greater than 1 in service areas secured with minimum cost, rather than in an area requiring stable system operation. Such environments include suburban settings. Less amplifiers than needed may be operated.

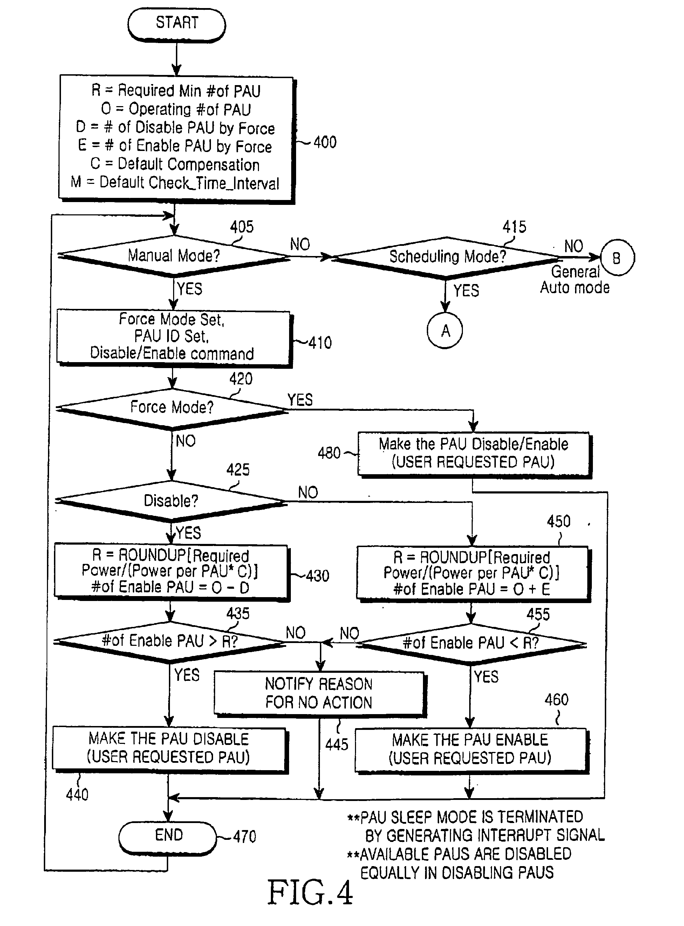

FIG. 4 is a flowchart illustrating a power amplifier controlling method according to an embodiment of the present invention..
Referring to FIG. 4, parameters (R, O, D, E and C) listed in Table 1 and parameter M are set in step 400. M is Check_Time_Interval representing a time interval at which the number of required amplifiers is automatically calculated in the auto/scheduling mode.
In decision step 405, the BS decides whether the sleep mode is a manual mode. The type of the sleep mode can be selected by the operator. If the sleep mode is not the manual mode ("No" path from decision step 405), the BS decides whether it is a scheduling mode in decision step 415. In the case of the scheduling mode ("Yes" path from decision step 415), the BS goes to routine A, and in the case of the auto mode ("No" path from decision step 415), it goes to routine B, which will be described later with references to FIGs. 5 and 6.
If the sleep mode is set to the manual mode ("Yes" path from decision step 405), the operator enters an Enable/Disable command and the ID of a power amplifier unit (PAU) to be enabled/disabled in step 410. As discussed above, the manual mode is temporarily set as commanded by the operator. The operator also further sets a force mode or an artificial intelligence mode in step 410. In step decision 420, the BS then decides whether the manual mode is the force mode. If it is the force mode ("Yes" path from decision step 420), the BS enables/disables the requested PAU in step 480 and then the manual mode operation ends in step 470.
If the manual mode is determined not to be the force mode in decision step 420 ("No" path from decision step 420), the BS decides whether the operator has commanded Enable or Disable in decision step 425. If the command indicates Disable ("Yes" path from decision step 425), the BS calculates the number R of required PAUs by Eq. (1) and the number of PAUs to be enabled (Enable PAUs) by "O-D" in step 430.
In decision step 435, the BS decides whether E is larger than R. If (O-D) is larger than R ("Yes" path from decision step 435), the BS disables the requested PAU in step 440 and the manual mode operation ends in step 470. On the other hand, if (O-D) is less than or equal to R ("No" path from decision step 435), the BS outputs a command error message without disabling any PAUs in decision step 445 and ends the manual mode operation in step 470.
Meanwhile, if the command indicates Enable in decision step 425 ("No" path from decision step 425), the BS calculates R by Eq. (1) and the number of Enable PAUs by "O+E" in step 450. Then, the BS decides whether E is less than R in decision step 455. If (O+E) is less than R ("Yes" path from decision step 455), the BS enables the requested PAU in step 460. If (O+E) is equal to or greater than R ("No" path from decision step 455), the BS goes to step 445. When the sleep mode is to be terminated, an interrupt signal is generated. In addition, PAU disabling is performed such that available PAUs are equally disabled. The same thing applies to the other modes.

FIG. 5 is a flowchart illustrating another embodiment of the power amplifier controlling method, specifically an auto mode operation according to an embodiment of the present invention. This operation is performed when the sleep mode is determined not to be the scheduling mode in decision step 415 of FIG. 4.

Upon initiation of the auto mode operation as commanded by the operator, M (Check_Time_Interval) and C (compensation parameter) are set to adjust the number of Enable PAUs in step 500. In step 510, the BS calculates R by Eq. (1) to thereby automatically enable/disable PAUs based on the two parameters.

In decision step 520, the BS decides whether the number O of operating PAUs is equal to R. If O is equal to R ("Yes" path from decision step 520), the BS returns to step 510. If they are different ("No" path from decision step 520), the BS decides whether O is greater than R in decision step 530. If O is greater than R ("Yes" path from decision step 530), which implies that there are redundant PAUs, the BS disables the redundant PAUs in step 540. On the contrary, if O is less than R ("No" path from decision step 520), the BS enables as many disabled PAUs as needed in step 550. When M is over in step 555, the BS repeats steps 510 to 550 according to a timer set in step 500. The auto mode is terminated as commanded by the operator. For example, an algorithm of generating an interrupt signal to the auto mode operation can be implemented.

FIG. 6 is a flowchart illustrating a third embodiment of the power amplifier controlling method, that is, a scheduling mode operation according to an embodiment of the present invention. This procedure is performed when the sleep mode is determined to be the scheduling mode in decision step 415 of FIG. 4.

Upon initiation of the scheduling mode as commanded by the operator, a start time and an end time are set so that PAUs are operated in the sleep mode for the intervening time period in step 600. Also, an Enable/Disable command, the ID of a PAU to be enabled/disabled, M and C are entered, and a force/artificial intelligence mode is set.

In decision step 610, the BS decides whether the end time is over. If the end time is not over ("No" path from decision step 610), the BS decides whether the sleep mode is a force mode in decision step 620. In the case of the force mode ("Yes" path from decision step 620), the BS enables/disables the requested PAU in step 690 and then returns to step 610.

If the sleep mode is the artificial intelligence mode in step 620 ("No" path from decision step 620), the BS calculates R by Eq. (1) and the number of Enable PAUs by "O-D+E" in step 630. In decision step 640, the BS compares (O-D+E) with R. If they are equal ("Yes" path from decision step 640), the BS returns to step 610 through step 680. On the contrary, if they are different ("No" path from decision step 640), the BS decides whether (O-D+E) is greater than R in decision step 650. If (O-D+E) is greater than R ("Yes" path from decision step 650), which implies that redundant PAUs are operating, the BS disables a PAU requested by the operator in step 660. Meanwhile, if (O-D+E) is less than R ("No" path from decision step 650), the BS enables the requested PAU in step 670. Upon time-out in step 680, the BS returns to step 610. If the end time is over in step 610, the scheduling mode is terminated.

Application Results of the Present Invention

The sleep mode proposed in the present invention will be described in terms of power efficiency and cost.

1. Amplifier Model for Efficiency Estimation

Table 2 below illustrates power consumption in PAU models according to their states. The PAUs are modeled on PAUs actually used in a BS. OVHD output corresponding 2FA is assumed to be 35 dBm and amounts of current consumption are actual measurements.

Table 2

| Case | OVHD output | PAU-C 60W | PAU-K 60W |
|---|---|---|---|
| Idle | Po=35dBm (2FA) | 14.1A | 10.7A |
| Case_1 idle | Po=38dBm (4FA) | 15.2A | 11.8A |
| Case_2 idle | Po=39.7dBm (6FA) | 16.4A | 13.0A |
| Case_3 idle | Po=41dBm (8FA) | 17.7A | 14.4A |
| | Po=43dBm | 19.3A | 15.7A |
| Disable | | 0.3A | 0.5A |
| Max Traffic | | 29.0A | 30.0A |

Table 3 illustrates the power reduction efficiency of PAU-C. In the idle state in which only overhead is output, the normal mode is compared with the sleep mode in power reduction efficiency.

Table 3

| PAU-C (Powerwave) | | | | | | | | | |
|---|---|---|---|---|---|---|---|---|---|
| Case | Number of PAUs | Current Consumption | | | | | Saved current A)/ sector | Saved energy (Wh)/3Sector | Power Reduction Efficiency (%) |
| | | PAU #0 | PAU #1 | PAU #2 | PAU #3 | Total (A) | | | |
| Case 1 | 2/Sec | 15.2 A | 0.3A | | | 15.5 | 14.1x2-15.5=12.7 | 3Sectorx12.7 Ax27Vx8H =8229.6 | 8.8 |
| Case 2 | 3/Sec | 16.4 A | 0.3A | 0.3A | | 17.0 | 14.1x3-17=25.3 | 3Sectorx25.3 Ax27Vx8H =16394.4 | 11.7 |
| Case 3 | 4/Sec | 17.7 A | 0.3A | 0.3A | 0.3A | 18.6 | 14.1×4-18.6=37.8 | 3Sectorx37.8 Ax27Vx8H =24494.4 | 13.1 |

Table 4 illustrates the power reduction efficiency of PAU-K. In the idle state in which only overhead is output, the normal mode is compared with the sleep mode in power reduction efficiency.

Table 4

| PAU-K (Spectrian) | | | | | | | | | |
|---|---|---|---|---|---|---|---|---|---|
| Case | No. of PAUs | Current Consumption | | | | | Saved current (A)/sector | Saved energy (Wh)/3Sector | Power Reduction Efficiency (%) |
| | | PAU #0 | PAU #1 | PAU #2 | PAU #3 | Total (A) | | | |
| Case 1 | 2/Sec | 11.8 A | 0.5A | | | 12.3 | 10.7x2-12.3=9. 1 | 3Sectorx9.1Ax27V x8H=5896 | 6.4 |
| Case 2 | 3/Sec | 13.0 A | 0.5A | 0.5A | | 14.0 | 10.7x3-14=18. 1 | 3Sectorxl8.lAx27 Vx8H=11728 | 8.5 |
| Case 3 | 4/Sec | 14.3 A | 0.5A | 0.5A | 0.5A | 15.8 | 10.7x4-15.8=2 7 | 3Sectorx27Ax27V x8H=17496 | 9.5 |

EP 1 448 003 A2

The power reduction efficiency is calculated by

$$\text{power reduction efficiency} =$$

$$\frac{\text{saved power (current) for 8 - hour sleep mode operation}}{\text{16 - hour Max power(current)/8 - hour Idle power(current) according to traffic models}} \quad (2)$$

As an example, for PAU-K, the power reduction efficiency in case 1 is calculated by

$$\text{Power reduction efficiency in case 1 for PAU - K} =$$

$$\frac{(3\text{ PAUs} \times 9.1\text{A} \times 8\text{ hours})}{(6\text{ PAUs} \times 30\text{A} \times 16\text{ hours}) + (6\text{ PAUs} \times 10.7\text{A} \times 88\text{ hours})} \times 100 = 6.4\% \quad (3)$$

2. Power Rate Reduction in Each Case in Sleep Mode

PAU-K and PAU-C are compared in each case in terms of saved power and saved power charge.
Table 5 illustrates a low-voltage seasonal power rate schedule provided by the Korean Electric Power Corporation.

Table 5

|  | Power charge (won per kWh) | | |
|---|---|---|---|
|  | Summer (July and August) | Spring, Autumn (April-June, September) | Winter (October-March) |
| Low voltage power | 101.20 | 67.50 | 71.80 |

Table 6 lists power charges for each case. From Table 6, it is noted that power charge saving increases with the number of PAUs sharing load. The illustrated saved charge is for 4000 BSs.

Table 6

|  | PAU |  | One day | July (30 days) | | One year (12 months) | Saved Charge (4000 BSs) |
|---|---|---|---|---|---|---|---|
|  |  |  | Power (Watt) | Power (KWh) | Charge (won) | Charge (won) |  |
| V.4 | PAU-C | Case 1 | 8,229 | 247 | 24,983 | 222,973 | 891,891,936 |
|  |  | Case 2 | 16,394 | 492 | 49,772 | 444,212 | 1,776,847,296 |
|  | PAU-K | Case 1 | 5,896 | 177 | 17,900 | 159,758 | 639,032,064 |
|  |  | Case 2 | 11,728 | 352 | 35,606 | 317,782 | 1,271,127,552 |
| V.5 | PAU-C | Case 3 | 24,494 | 735 | 74,364 | 663,689 | 2,654,757,696 |
|  | PAU-K | Case 3 | 17,496 | 525 | 53,118 | 474,072 | 1,896,286,464 |

3. Estimation of Reliability Increase by Sleep Mode

The application of the sleep mode imposes less electrical and thermal stress on a power transformer within an amplifier, thereby increasing the reliability of the amplifier.
The reliability increase is analyzed as follows.
Determine a comparative device: a comparative device used for comparison of the reliability of a power MOSFET within a PAU is MRF9180.
Set operation environments: the MSFET is operated in both normal and sleep modes under the environments described below.

1) Normal Mode

Condition: operating temp.=80° C

Pout=17W
Power Ratio=10%
Operated under these conditions for 24 hours

2) Sleep Mode

Condition: operating temp.=25° C (room temp.)
Pout=0W
Power Ratio=0%
Operated under these conditions for 8 hours, and in the normal mode for 16 hours

MTBF Calculation: the MTBF for each mode is calculated in case 3 of Method 1 of Telcordia TR-000332 standard, and the simulation tool used is Relex 7.3.

Table 7 illustrates MTBF computations for MRF9180 in each mode.

Table 7

| Mode | Failure rate | MTBF | Used standard |
|---|---|---|---|
| Normal mode | 0.675226 | 1,480,985 Hour | Telcordia 332 |
| Sleep mode | 0.498955 | 2,004,188 Hour | Telcordia 332 |

In Table 7, the MTBF was calculated for a single power MOSFET component, not at either a system level or a PAU level. As noted, the PAU life is increased about 1.3 times.

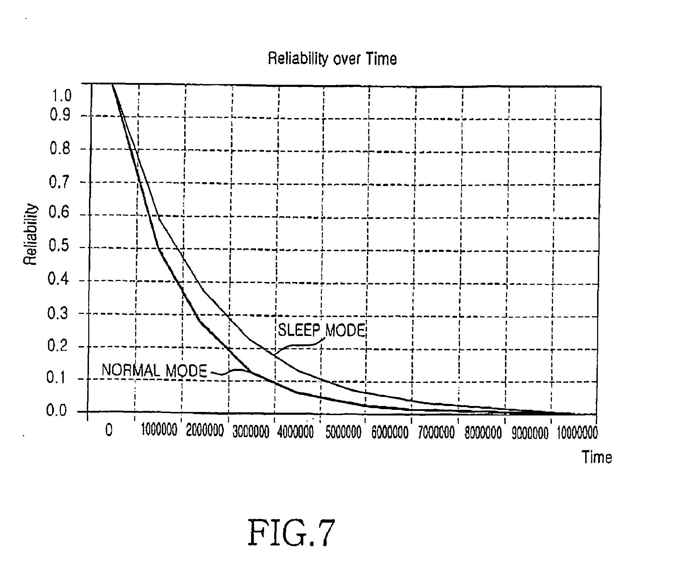

Reliability over time curves of MRF9180 in both modes are illustrated in FIG. 7. FIG. 7 is a graph illustrating a reliability versus time. The reliability is higher over time in the sleep mode than in the normal mode.

In accordance with the embodiments of the present invention as described above, the power saving method and apparatus for a BS mitigate electrical and thermal stresses on PAUs, as compared to the conventional technology. Therefore, PAU life is lengthened.

Considering the significance of cooling in designing PAUs and a BS, the reduction of heat emission for a less traffic time period reduces load on a cooling system in a PAU sleep mode.

Furthermore, implementation of the apparatus and methods according to the embodiments of the present invention provide enhanced safety margins by preventing deadly errors in the system, which might otherwise be generated due to an operator's misjudgment in a manual mode.

While the invention has been shown and described with reference to a certain preferred embodiment thereof, it will be understood by those skilled in the art that various changes in form and details may be made therein without departing from the spirit and scope of the invention as defined by the appended claims.

**Claims**

1.  In a base station (BS) having at least two amplifiers for amplifying transmit power for a mobile station (MS), a method of controlling the amplifiers, comprising the steps of:

    deciding an amplifier to be enabled or disabled between the at least two amplifiers; and
    enabling or disabling the decided amplifier.

2.  The method of claim 1, wherein the step of deciding an amplifier to be enabled or disabled comprises:

    deciding the amplifier to be enabled or disabled according to an input from the operator ;and
    determining whether the decision of the amplifier to be enabled or disabled according to the input from the operator is right or wrong.

3.  The method of claim 2, wherein the step of determining whether the decision of the amplifier to enabled or disabled according to the input from the operator is a right or wrong decision comprises:

    comparing the number of required amplifiers with the total number of amplifiers to be enabled, the number of required amplifiers being calculated according to required power and amplifier characteristics and the total number of amplifiers to be enabled being calculated according to the decision of the amplifier to be enabled or disabled.

**4.** The method of claim 3, further comprising:

enabling as many amplifiers as required if the total number of amplifiers to be enabled is greater than the number of required amplifiers.

**5.** The method of claim 3, further comprising:

outputting an error message indicating that the decision of the amplifier to enabled or disabled according to the input from the operator is a wrong decision if the total number of amplifiers to be enabled is less than the number of required amplifiers.

**6.** The method of claim 1, wherein the step of deciding an amplifier to be enabled or disabled comprises:

determining automatically an amplifier to be enabled or disabled by calculating the number of required amplifiers according to required power and amplifier characteristics.

**7.** The method of claim 6, wherein the calculation is carried out at every predetermined time intervals.

**8.** The method of claim 7, wherein the predetermined time interval is set by the operator.

**9.** The method of claim 8, wherein the step of deciding an amplifier to be enabled or disabled comprises:

comparing the number of current operating amplifiers with the number of required amplifiers; and
disabling redundant amplifiers, if the number of current operating amplifiers is greater than the number of required amplifiers.

**10.** The method of claim 9, further comprising:

enabling as many unused amplifiers as necessary if the number of current operating amplifiers is less than the number of required amplifiers..

**11.** The method of claim 1, wherein the step of deciding an amplifier to be enabled or disabled comprises:

setting a time period by the operator; and
deciding, for the time period, the amplifier to be enabled or disabled according to an input from the operator.

**12.** The method of claim 11, wherein the step of deciding an amplifier to be enabled or disabled comprises:

deciding the amplifier to be enabled or disabled according to the ID of an amplifier input by the operator.

**13.** The method of claim 12, further comprising:

determining whether the decision of the amplifier to be enabled or disabled is right or wrong.

**14.** The method of claim 13, wherein the step of determining whether the decision of the amplifier to enabled or disabled is a right or wrong decision comprises:

comparing the number of required amplifiers with the total number of amplifiers to be enabled, the number of required amplifiers being calculated according to required power and amplifier characteristics and the total number of amplifiers to be enabled being calculated according to the decision of the amplifier to be enabled or disabled.

**15.** The method of claim 14, further comprising:

enabling as many amplifiers as required if the total number of amplifiers to be enabled is greater than the number of required amplifiers.

**16.** The method of claim 14, further comprising:

outputting an error message indicating that the decision of the amplifier to enabled or disabled is a wrong decision if the total number of amplifiers to be enabled is less than the number of required amplifiers.

**17.** The method of claim 11, wherein the step of deciding an amplifier to be enabled or disabled comprises:

determining automatically an amplifier to be enabled or disabled by calculating the number of required amplifiers according to required power and amplifier characteristics.

**18.** In a base station (BS) having at least two amplifiers for amplifying transmit power for a mobile station (MS), an apparatus for controlling the amplifiers, comprising:

a channel combiner for measuring total power for each sector of the BS; and
a sleep mode operator for deciding whether to enable or disable the at least two amplifiers based on the measured power.

**19.** The apparatus of claim 18, wherein the sleep mode operator comprises:

a storage for storing parameters needed for control of the amplifiers and the number of current operating amplifiers;
a calculator for calculating the number of required amplifiers based on required power, the number of the operating amplifiers, and a predetermined compensation parameter; and
a controller for controlling the at least two amplifiers to be in the enable or disable states according to the number of required amplifiers according to a predetermined algorithm.

**20.** The apparatus of claim 18, wherein the sleep mode operator decides the amplifier to be enabled or disabled according to an input from the operator and determines whether the decision of the amplifier to be enabled or disabled according to the input from the operator is right or wrong.

**21.** The apparatus of claim 20 wherein the sleep mode operator makes the decision of whether the decision of the amplifier to be enabled or disabled according to the input from the operator is right or wrong by comparing the number of required amplifiers with the total number of amplifiers to be enabled, the number of required amplifiers being calculated according to required power and amplifier characteristics and the total number of amplifiers to be enabled being calculated according to the decision of the amplifier to be enabled or disabled.

**22.** The apparatus of claim 21, wherein the sleep mode operator enables as many amplifiers as required if the number of required amplifiers is greater than the total number of amplifiers to be enabled.

**23.** The apparatus of claim 21, wherein the sleep mode operator outputs an error message indicating that the decision of the amplifier to enabled or disabled according to the input from the operator is a wrong decisionif the number of required amplifiers is less than the total number of amplifiers to be enabled.

**24.** The apparatus of claim 18, wherein the sleep mode operator automatically decides the amplifier to be enabled or disabled by calculating the number of required amplifiers according to required power and amplifier characteristics.

**25.** The apparatus of claim 24, wherein the sleep mode operator carries out the calculation at every predetermined time intervals.

**26.** The apparatus of claim 25, wherein the time interval is set by the operator.

**27.** The apparatus of claim 24, wherein the sleep mode operator compares the number of current operating amplifiers with the number of required amplifiers, and disables redundant amplifiers, if the number of current operating amplifiers is greater than the number of required amplifiers.

**28.** The apparatus of claim 27, wherein the sleep mode operator enables as many unused amplifiers as necessary if the number of current operating amplifiers is less than the number of required amplifiers.

29. The apparatus of claim 18, wherein the sleep mode operator receives a time period set by the operator and decides an amplifier to be enabled or disabled according to input from the operator for the time period.

30. The apparatus of claim 29, wherein the sleep mode operator decides the amplifier to be enabled or disabled according to the ID of an amplifier input by the operator.

31. The apparatus of claim 30, wherein the sleep mode operator determines whether the decision of the amplifier to be enabled or disabled is right or wrong.

32. The apparatus of claim 31, wherein the sleep mode operator compares the number of required amplifiers with the total number of amplifiers to be enabled, the number of required amplifiers being calculated according to required power and amplifier characteristics and the total number of amplifiers to be enabled being calculated according to the decision of the amplifier to be enabled or disabled.

33. The apparatus of claim 32, wherein the sleep mode operator enables as many amplifiers as required if the total number of amplifiers to be enabled is greater than the number of required amplifiers.

34. The apparatus of claim 32, wherein the sleep mode operator outputs an error message indicating that the decision of the amplifier to enabled or disabled is a wrong decision if the total number of amplifiers to be enabled is less than the number of required amplifiers.

35. The apparatus of claim 29, wherein the sleep mode operator automatically decides the amplifier to be enabled or disabled by calculating the number of required amplifiers according to required power and amplifier characteristics.

FIG.1

FIG.2

FIG.3

FIG.4

B

M(Check_Time_Interval)Set
C(Compensation)Set ~500

R = ROUNDUP[Required
Power/(Power per PAU* C)] ~510

520

O = R? —— YES

NO

530

O > R? —— NO

YES

MAKE THE PAU DISABLE
(REDUNDANT PAU)

550

MAKE THE PAU DISABLE
(DISABLED PAU)

540

Time(M) over ~555

FIG.5

START

Start / End Time Set
M(Check Time Interval) Set,
C(Compensation) Set,
Force Mode Set,
PAU ID Set,
Disable/Enable command
~600

610
Endtime is over? — YES → END

NO

620
Force Mode? — YES

NO

690
Make the PAU Disable/Enable
(USER REQUESTED PAU)

$R = ROUNDUP[Required$
$Power/(Power\ per\ PAU* C)]$
#of Enable PAU = O – D + F
~630

640
#of Enable PAU = R? — YES

NO

650
#of Enable PAU > R? — NO

YES

670
MAKE THE PAU ENABLE
(USER REQUESTED PAU)

MAKE THE PAU DISABLE
(USER REQUESTED PAU)
660

Time(M) over ~680

**PAU SLEEP MODE IS TERMINATED
BY GENERATING INTERRUPT SIGNAL
**AVAILABLE PAUS ARE DISABLED
EQUALLY IN DISABLING PAUS

FIG.6

Reliability over Time

FIG.7